# EUROPEAN PATENT SPECIFICATION

(11) **EP 4 478 036 B1**
(45) Date of publication and mention of the grant of the patent: **06.05.2026**
(21) Application number: 23903947.2
(22) Date of filing: 12.12.2023
(51) Int. Cl.: G01N 21/892, G01N 21/894, H01M 4/04, G01N 21/88, G01N 21/89

(54) **ELECTRODE SHEET DEFECT INSPECTION DEVICE**
VORRICHTUNG ZUR INSPEKTION VON ELEKTRODENFOLIENDEFEKTEN
DISPOSITIF D'INSPECTION DE DÉFAUT DE FEUILLE D'ÉLECTRODE

(30) Priority: 14.12.2022 KR 20220174614
(43) Date of publication of application: 18.12.2024
(73) Proprietor: LG Energy Solution, Ltd., Seoul 07335 (KR)
(72) Inventor: LEE, Jong Hwa, Daejeon 34122 (KR); CHOI, Ee Beom, Daejeon 34122 (KR)
(74) Representative: Goddar, Heinz J.
(86) International application number: PCT/KR2023/020385
(87) International publication number: WO 2024/128744

(56) References cited:
- JP-A- 2009 271 037
- KR-A- 20060 027 261
- KR-A- 20080 019 128
- KR-A- 20120 110 418
- KR-A- 20220 093 524
- US-A1- 2003 025 090

## Description

### Technical Field

The present invention relates to an electrode sheet defect inspection device, and relates to an electrode sheet defect inspection device capable of preventing shadows from occurring upon inspecting defective marks by forming a partial region of a tab guide part with a transparent material.

This application claims the benefit of priority based on Korean Patent Application No. 10-2022-0174614 dated December 14, 2022.

### Background Art

The types of devices that use secondary batteries as an energy source increase. Particularly, lithium secondary batteries are also used in a small-sized battery cell field used in mobile devices or small electronic products, and a medium and large-sized battery pack field used as an energy source for electric vehicles or power storage systems, and the like that require high output and high voltage, due to advantages such as high energy density and high charging voltage.

The lithium secondary battery is manufactured by housing an electrode assembly and an electrolyte in a battery case, and sealing them. The electrode assembly is formed by laminating a positive electrode and a negative electrode with a separator interposed therebetween.

The secondary battery manufacturing process comprises an electrode process, an assembly process, and an activation process, where the electrode process is a process of making a positive electrode and a negative electrode.

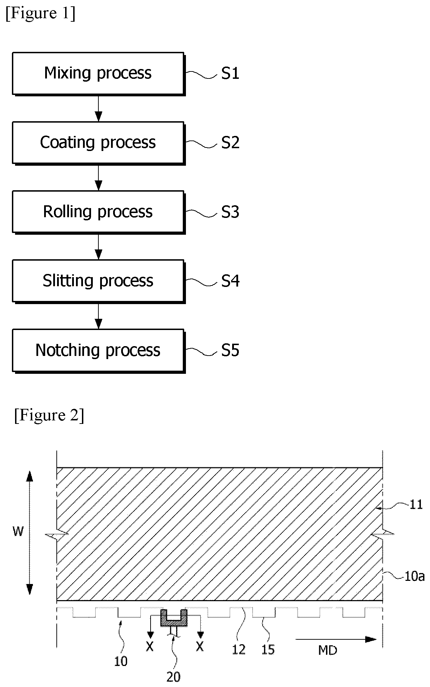

Figure 1 is an electrode process flowchart of a secondary battery.

As shown in Figure 1, the electrode process may comprise a mixing process (S1), a coating process (S2), a rolling process (S3), a slitting process (S4), and a notching process (S5).

The mixing process (S1) is a process of measuring and mixing various raw materials necessary to make a negative electrode and a positive electrode, where a positive electrode slurry or a negative electrode slurry, in which various raw materials are mixed in the mixing process (S1), is produced.

The coating process (S2) is a process of coating the positive electrode or negative electrode slurry on an electrode sheet (10) (see Figure 2, for example, copper or aluminum) through a coating device. The electrode sheet (10) coated with the positive electrode or negative electrode slurry through the coating process (S2) is transferred to the rolling process (S3).

The rolling process (S3) is a process of rolling the slurry coated on the electrode sheet (10) while passing the electrode sheet (10) between two rolling rolls (not shown). In the slurry on the electrode sheet (10), its density increases and its volume decreases by the rolling process (S3).

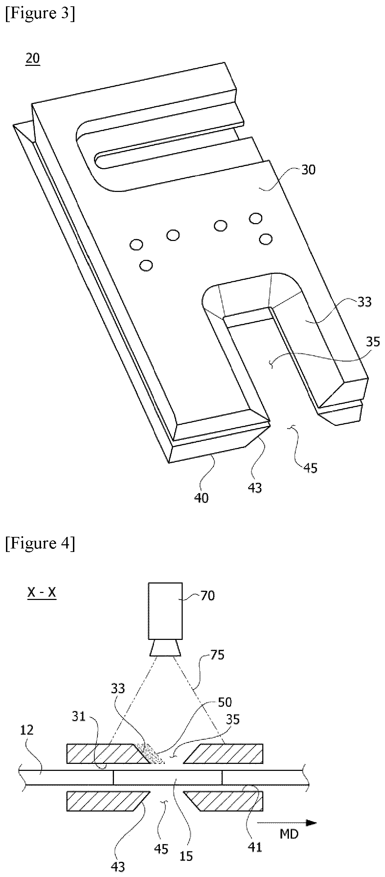

Figure 2 is a schematic diagram showing an arrangement state of a tab guide (20) with respect to an electrode sheet (10), Figure 3 is a perspective diagram schematically showing a tab guide (20) according to a conventional art, and Figure 4 is a diagram in a state cut along the line X-X of Figure 2, which shows an arrangement state of a mark inspection part (70) and a tab guide (20).

After the rolling process (S3), the electrode sheet (10) is transferred to a cutting process (S4, S5). The cutting process (S4, S5) comprises a slitting process (S4) and a notching process (S5).

Here, the slitting process (S4) is a process of cutting the electrode sheet (10) into a plurality of electrodes. Then, the notching process (S5) is a process for forming a tab part (15) using a laser or the like on a plain part (12) on which the slurry is not applied on an electrode base material (10a).

In this instance, in the notching process (S5), which is the last step of the electrode process, a defect inspection of the tab part (15) for the electrode sheet (10) after notching is performed. After the notching process (S5), the tab part (15) of the electrode sheet (10) is inspected for defects based on photographic information obtained by photographing the tab part (15) of the electrode sheet (10) using a vision camera. In this instance, lifting or sagging of the tab part (15), and the like is checked through the defect inspection of the tab part (15).

Afterwards, based on the vision inspection information, a defective mark is indicated on the tab part (15) that is determined to be defective. For example, the defective mark may be printed on the tab part (15) where a defect exists in the electrode sheet (10).

Afterwards, it is inspected whether the defective mark has been properly printed on the tab part (15) of the electrode sheet (10).

Upon inspecting defective marks, the tab guide (20) is used. Referring to Figures 2 and 3, the tab guide (20) is disposed to pass the edge of the electrode sheet (10) in the width direction (W), that is, the plain part (12) on which the tab part (15) is formed.

Referring to Figures 3 and 4, the conventional tab guide (20) comprises an upper guide member (30) and a lower guide member (40).

The upper guide member (30) and the lower guide member (40) are disposed above and below the tab part (15) of the electrode sheet (10), respectively, and provided to pass through the tab part (15) of the electrode sheet (10) under traveling through a gap between the upper guide member (30) and the lower guide member (40).

Referring to Figure 4, the upper tab guide member (30) has an upper guide surface (31), an upper inclined surface (33), and an upper opening (35), and the upper inclined surface (33) is provided to be inclined upward from the upper guide surface (31). The upper opening (35) is an opening that penetrates the upper guide member (30) up and down, which exposes the defective mark printed on the tab part (15) to the mark inspection part (70.) The mark inspection part (70) is a vision camera, which may have a predetermined inspection region (75), and may be disposed at the upper portion of the electrode sheet (10).

In addition, the lower guide member (40) has a lower guide surface (41), a lower inclined surface (43), and a lower opening (45), and the lower guide surface (41) is disposed to face the upper guide surface (31).

Referring to Figure 4, upon inspecting the defective mark of the tab part (15), when light is irradiated to the inspection region (75), a shadow (50) may occur in the portion corresponding to the upper opening (35) of the upper guide member (30). In this instance, the mark inspection part (70) recognizes the shadow (50) as the defective mark, whereby there is a problem in which the normal portion is treated as a defective portion. At this time, there was a problem that the equipment was stopped unnecessarily due to an inspection error in the mark inspection part (70).

### Disclosure

### Technical Problem

It is a problem to be solved by the present invention to provide an electrode sheet defect inspection device capable of preventing shadows from occurring in an inspection region upon inspecting defective marks by forming a partial region of a tab guide part with a transparent material.

### Technical Solution

An electrode sheet defect inspection device according to one example of the present invention comprise a vision inspection part provided to inspect defects in each tab part during a traveling process of an electrode sheet on which a plurality of tab parts is formed, a marking part printing a defective mark on the tab part determined to be defective, based on inspection information of the vision inspection part, a tab guide part disposed to pass the tab part of the electrode sheet passing through the marking part, having an opening for exposing a partial region of the tab part during traveling to the outside, and provided so that a partial region surrounding the opening is transparent, and a mark inspection part provided to inspect the defective mark indicated on the tab part exposed to the outside through the opening of the tab guide part.

Also, the tab guide part may comprise an upper guide member disposed at the upper portion of the tab part of the electrode sheet during traveling, and having a first main body having a first opening for exposing the tab part and an upper transparent member provided to cover a partial region of the first opening, and a lower guide member disposed at the lower portion of the tab part of the electrode sheet during traveling, and positioned to be apart at a predetermined interval from the upper guide member.

In addition, the tab guide part may be disposed so that the tab part of the electrode sheet during traveling passes through the interval between the upper guide member and the lower guide member. That is, the upper guide member and the lower guide member may be disposed to be spaced apart at a predetermined interval so that the electrode sheet can pass between the upper guide member and the lower guide member even when lifting or sagging, and the like occurs in the tab part of the electrode sheet.

Furthermore, the upper guide member may have a first guide surface where the first main body faces the upper surface of the tab part.

Also, the upper transparent member may be provided so that one surface is positioned on the same plane as the first guide surface.

In addition, the upper guide member may be provided such that the first guide surface comprises a non-transparent region through which light does not transmit.

Furthermore, the upper guide member may be provided so that a mounting surface, on which the upper transparent member is mounted, is orthogonal to the first guide surface.

Also, the electrode sheet defect inspection device, wherein in the upper guide member, the first main body and the upper transparent member are formed of different materials.

In addition, the upper transparent member may be formed of a glass material.

Furthermore, the mark inspection part may be provided to inspect the defective mark indicated on the tab part exposed through the first opening of the upper guide member. That is, the mark inspection part may be disposed at the upper portion of the tab part of the electrode sheet during traveling.

Also, the lower guide member may have a second main body having a second opening for exposing the tab part, and a lower transparent member provided to cover a partial region of the second opening. As one example, the lower guide member may have the same structure as the upper guide member, and the upper guide member and the lower guide member may have a vertically symmetric shape based on the electrode sheet during traveling.

In addition, the lower guide member may have a second guide surface where the second main body faces the lower surface of the tab part.

Also, the lower transparent member may be provided so that one surface is positioned on the same plane as the second guide surface.

In addition, the lower guide member may be provided so that the second guide surface comprises a non-transparent region through which light does not transmit.

Furthermore, the lower guide member may be provided so that a mounting surface, on which the lower transparent member is mounted, is orthogonal to the second guide surface.

Also, in the lower guide member, the second main body and the lower transparent member may be formed of different materials.

In addition, the lower transparent member may be formed of a glass material.

### Advantageous Effects

As discussed above, the electrode sheet defect inspection device related to one example of the present invention has the following effects.

As it is equipped with the transparent member made of the transparent material on the opening side of the tab guide part exposing the defective mark formed on the tab part of the electrode sheet to the outside, it is possible to prevent shadows from occurring upon defect inspection.

In addition, by preventing shadows from occurring in the inspection region of the mark inspection part for inspecting the defective mark formed on the tab part, it is possible to prevent inspection errors, and it is possible to improve inspection accuracy of the mark inspection part.

### Description of Drawings

Figure 1 is an electrode process flowchart of a secondary battery.
Figure 2 is a schematic diagram showing an arrangement state of a tab guide with respect to an electrode sheet.
Figure 3 is a perspective diagram schematically showing a tab guide according to a conventional art.
Figure 4 is a diagram in a state cut along the line X-X of Figure 2, which shows an arrangement state of a mark inspection part and a tab guide.
Figure 5 is a schematic diagram showing an electrode sheet defect inspection device according to one example of the present invention.
Figure 6 is a schematic diagram showing an arrangement state of a tab guide part with respect to an electrode sheet.
Figure 7 is a perspective diagram schematically showing a tab guide part.
Figure 8 is a diagram in a state cut along the line Y-Y of Figure 6, which shows a tab guide part according to a first example of the present invention.
Figure 9 is a diagram in a state cut along the line Y-Y of Figure 6, which shows a tab guide part according to a second example of the present invention.

### Mode for Invention

Hereinafter, an electrode sheet defect inspection device according to one example of the present invention will be described with reference to the attached drawings.

In this document, regardless of the reference numerals, the same or corresponding components are given by the same or similar reference numerals, duplicate descriptions thereof will be omitted, and for convenience of explanation, the size and shape of each component member as shown can be exaggerated or reduced.

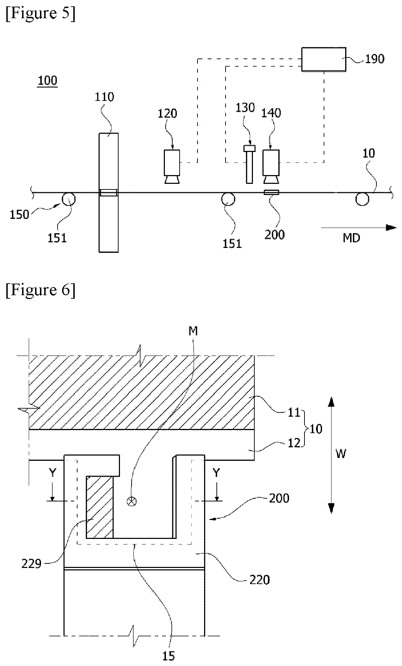

Figure 5 is a schematic diagram showing an electrode sheet defect inspection device (100) according to one example of the present invention.

Referring to Figures 2 and 5, the electrode sheet defect inspection device (100) comprises a transfer part (150) including a plurality of traveling rolls (151) for transferring an electrode sheet (10). The electrode sheet (10) is transferred along a preset traveling direction (MD) by the transfer part (150).

In this document, the electrode sheet (10) comprises a coating layer (11) and a plain part (12) provided on an electrode base material (10a, for example, copper or aluminum). The coating layer (11) represents a region on which a positive electrode or negative electrode slurry is coated, and the plain part (12) represents a region on the electrode base material (10a) where the coating layer (11) is not present. The plain part (12) is located at the edge along the width direction (W) of the electrode sheet (10). The width direction (W) of the electrode sheet (10) may be a direction orthogonal to the traveling direction (MD) of the electrode sheet (10).

The electrode sheet defect inspection device (100) may comprise a notching process part (110). Through the notching process, a tab part (15) is formed on the plain part (12) of the electrode sheet (10), and a plurality of tab parts (15) are sequentially provided along the traveling direction (MD) of the electrode sheet (10) on the electrode sheet (10) passing through the notching process part (100). As one example, the notching process part (110) may be provided to cut and process the plain part (12) by irradiating it with a laser. The notching process may be continuously performed during traveling of the electrode sheet (10).

The electrode sheet defect inspection device (100) comprises a vision inspection part (120) provided to inspect defects in each tab part (15) during the traveling process of the electrode sheet (10) on which the plurality of tab parts (15) is formed. The vision inspection part (120) may comprise one or more vision cameras.

Also, the electrode sheet defect inspection device (100) comprises a marking part (130) printing a defective mark (M) on the tab part (15) determined to be defective, based on the inspection information of the vision inspection part (110). The marking part (130) may comprise an inkjet type dispenser, and may be provided to spray ink onto the defective tab part (15).

In addition, the electrode sheet defect inspection device (100) may comprise a control part (190) for receiving inspection information from the vision inspection part (120) and controlling the marking part (130) based on the inspection information.

The control part (190) may be provided so that it receives inspection information of the vision inspection part (120), and calculates a time point when the tab part (15) determined to be detective passes through the marking part (130), based on the distance information between the vision inspection part (120) and the marking part (130), and the traveling speed information of the electrode sheet (10). At this time, when the tab part (15) determined to be defective from the vision inspection part (120) passes through the marking part (130), the control part (190) may allow to print the defective mark on the tab part (15) determined to be defective by operating the marking part (130). The marking operation of the marking part (130) may be performed during traveling of the electrode sheet (10).

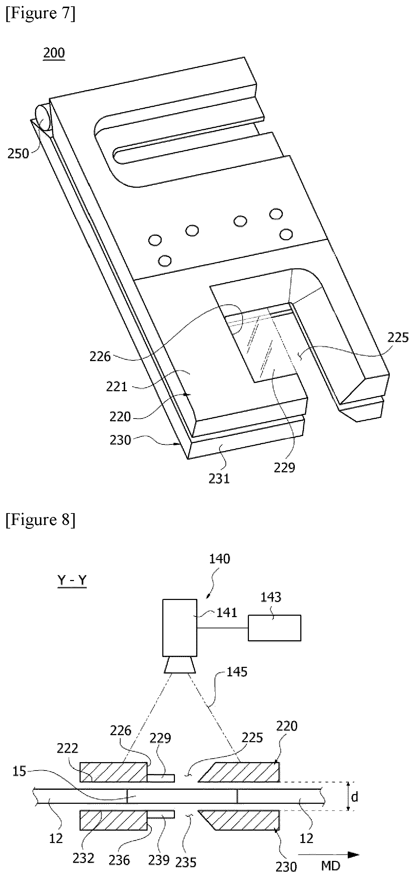

Figure 6 is a schematic diagram showing an arrangement state of a tab guide part (200) with respect to an electrode sheet (10), and Figure 7 is a perspective diagram schematically showing a tab guide part (200).

In addition, the electrode sheet defect inspection device (100) comprises a tab guide part (200) disposed to pass the tab part (15) of the electrode sheet (10) passing through the marking part (130), having an opening (225) for exposing a partial region of the tab part (15) during traveling to the outside, and provided so that a partial region surrounding the opening (225) is transparent.

The tab guide part (200) may be provided in multiple numbers along the traveling direction (MD) of the electrode sheet (10), which performs a function of preventing the tab part (15) of the electrode sheet (10) from lifting or sagging during the traveling process.

Figure 8 is a diagram in a state cut along the line Y-Y of Figure 6, which shows a tab guide part according to a first example of the present invention.

Also, the electrode sheet defect inspection device (100) comprises a mark inspection part (140) provided to inspect the defective mark (M) indicated on the tab part exposed to the outside through the opening (225) of the tab guide part (200). The mark inspection part (140) may comprise a vision camera (141) having a predetermined inspection region (145) and an illumination lamp (143) for irradiating the inspection region (145) with light. In addition, the inspection information of the mark inspection part (140) is transmitted to the control part (190).

The electrode sheet defect inspection device (100) according to one example of the present invention comprises a vision inspection part (120), a marking part (130), and a tab guide part (200), which are disposed sequentially along the traveling direction (MD) of the electrode base material (10), wherein the mark inspection part (140) may be provided at the upper portion of the tab guide part (200).

The vision inspection part (120), the marking part (130), and the mark inspection part (140) are sequentially disposed along the traveling direction (MD) of the electrode sheet (10).

The tab guide part (200) may be disposed to pass the tab part (15) formed on the plain part (12) of the electrode sheet (10) passing through the marking part (130).

The tab guide part (200) may be disposed within the inspection region (145) of the mark inspection part (140). The tab guide part (200) is for preventing the tab part (15) of the electrode sheet (10) from fluttering or sagging during traveling, which performs a function of guiding the tab part (15) while passing it through the inside.

In addition, the tab guide part (200) performs a function of exposing the defective mark (M) indicated on the tab part (15) to the inspection region (145) of the mark inspection part (140) through the opening (225). In this way, the mark inspection part (140) may be provided to inspect the defective mark (M) of the tab part (15) exposed through the tab guide part (200) during traveling of the electrode sheet (10).

Referring to Figures 6 and 8, the tab guide part (200) is located within the inspection region (145) of the mark inspection part (140), and guides the traveling of the tab part (15) of the plain part (12) of the electrode sheet (10). In addition, the tab guide part (200) comprises an upper guide member (220) and a lower guide member (230).

The tab guide part (200) may comprise an upper guide member (220) disposed on the upper portion of the tab part (15) of the electrode sheet (10) during traveling, and having a first main body (221) having a first opening (225) for exposing the tab part (15), and an upper transparent member (229) provided to cover a partial region of the first opening (225). The first opening (225) may expose the upper surface of the tab part (15) to the outside of the tab guide part (200), and thus performs a function of exposing the upper surface of the tab part (15) to the inspection region (145) of the mark inspection part (140).

Also, the tab guide part (200) may comprise a lower guide member (230) disposed at the lower portion of the tab part (15) of the electrode sheet (10) during traveling, and positioned to be apart at a predetermined interval from the upper guide member (220).

In addition, the tab guide part (200) may be disposed so that the tab part (15) of the electrode base material (10) during traveling passes through the interval (d) between the upper guide member (220) and the lower guide member (230). That is, the upper guide member (220) and the lower guide member (230) may be disposed to be spaced apart at a predetermined interval (d) so that even when lifting or sagging, and the like occurs in the tab part (15) of the electrode sheet (10), it may pass between the upper guide member (220) and the lower guide member (230).

The upper guide member (220) and the lower guide member (230) may each be formed of a metal material, and for example, may each be formed of an aluminum material.

Referring to Figure 8, the upper guide member (220) may have a first guide surface (222) facing the upper surface of the tab part (15). The first main body (211) may have a first guide surface (222) facing the upper surface of the tab part (15). The first guide surface (222) is disposed to face the upper surface of the tab part (15) during traveling.

Also, the upper transparent member (229) may be provided so that one surface is located on the same plane as the first guide surface (222). That is, in the upper transparent member (229), one surface may perform a function of guiding the traveling of the tab part (15) together with the first guide surface (222). That is, in the upper transparent member (229), one surface and the first guide surface (222) may be provided to be positioned on the same virtual plane without any step.

In addition, the upper guide member (220) may be provided so that the first guide surface (222) comprises a non-transparent region through which light does not transmit. That is, the first main body (221) having the first guide surface (222) may be formed to have a non-transparent region.

Furthermore, the upper guide member (220) may be provided so that a mounting surface (226), on which the upper transparent member (229) is mounted, is orthogonal to the first guide surface (222). That is, in the first main body (221), the mounting surface (226) facing the first opening (225) may be provided to be orthogonal to the first guide surface (222). In addition, the first opening (225) penetrates the first main body (221) up and down.

Also, in the upper guide member (220), the first main body (221) and the upper transparent member (229) may be formed of different materials. For example, the first main body (221) may be formed of an aluminum material, and the upper transparent member (229) may be formed of a glass material. In addition, the upper transparent member (229) is mounted on the first main body (211) to cover one region of the first opening (225). In this way, through the upper transparent member (229), the region where the defective mark (M) is exposed to the outside and the region guiding the traveling of the tab part (15) can be increased at the same time.

Referring to Figures 6 and 8, the mark inspection part (140) may be provided to inspect the defective mark (M) indicated on the tab part (15) exposed through the first opening (225) of the upper guide member (220). That is, the mark inspection part (140) may be disposed at the upper portion of the tab part (15) of the electrode sheet (10) during traveling. The upper guide member (220) may be disposed so that the first opening (225) is located within the inspection region (145), and the defective mark (M) indicated on the tab part (15) may be exposed to the inspection region (145) through the first opening (225).

Referring to Figure 8, the lower guide member (230) may have the same structure as the upper guide member (200), and the upper guide member (220) and the lower guide member (230) may have a vertically symmetric shape based on the electrode sheet (10) during traveling.

The lower guide member (230) may have a second main body (231) having a second opening (235) for exposing the tab part (15), and a lower transparent member (239) provided to cover a partial region of the second opening (235).

Also, the lower guide member (230) may have a second guide surface (232) facing the lower surface of the tab part (15). That is, the second main body (231) may have a second guide surface (232) facing the lower surface of the tab part (15). The second guide surface (232) is disposed to face the lower surface of the tab part (15) during traveling.

As described above, the first guide surface (222) and the second guide surface (232) are disposed to be spaced apart from each other at a predetermined interval (d). The tab part (15) passes inside the tab guide part (200) through the interval (d) between the first guide surface (222) and the second guide surface (232).

Also, the first guide surface (222) and the second guide surface (232) may be disposed to be in parallel, where the first guide surface (222) may perform a function of preventing the tab part (15) during traveling from lifting, and the second guide surface (232) may perform a function of preventing the tab part (15) during traveling from sagging. For example, when the tab part (15) lifts, the electrode sheet (10) may be guided so that in the traveling process, the tab part (15) is in contact with the first guide surface (222), and the tab part (15) no longer lifts by the first guide surface (222). In addition, when the tab part (15) sags, the electrode sheet (10) may be guided so that in the traveling process, the tab part (15) is in contact with the second guide surface (222), and the tab part (15) no longer sags by the second guide surface (222).

In addition, the lower transparent member (239) may be provided so that one surface is located on the same plane as the second guide surface (232). That is, in the lower transparent member (239), one surface may perform a function of guiding the traveling of the tab part (15) together with the second guide surface (232). That is, in the lower transparent member (239), one surface and the second guide surface (232) may be provided to be positioned on the same virtual plane without any step.

Furthermore, the lower guide member (230) may be provided so that the second guide surface (232) comprises a non-transparent region through which light does not transmit. That is, the second main body (231) having the second guide surface (232) may be formed to have a non-transparent region.

Also, the lower guide member (230) may be provided so that a mounting surface (236), on which the lower transparent member (239) is mounted, is orthogonal to the second guide surface (232). That is, in the second main body (231), the mounting surface (236) facing the second opening (235) may be provided to be orthogonal to the second guide surface (232). In addition, the second opening (235) penetrates the second main body (231) up and down.

Also, in the lower guide member (220), the second main body (231) and the lower transparent member (239) may be formed of different materials. For example, the second main body (231) may be formed of an aluminum material, and the lower transparent member (239) may be formed of a glass material. In addition, the lower transparent member (239) is mounted on the second main body (231) to cover one region of the second opening (235).

Referring to Figure 7, the upper guide member (220) and the lower guide member (230) may be rotatably connected. That is, the first main body (221) of the upper guide member (220) and the second main body (231) of the lower guide member (230) may be connected via a hinge (250), and accordingly, the first main body (221) and the second main body (231) may be rotated in directions closer to each other, or may be rotated in directions away from each other.

In the electrode sheet defect inspection device (100) having such a structure, defects in the tab parts (15) of the electrode sheet (10) are inspected as follows.

The electrode sheet (10) passing through the notching process part (110) sequentially passes through the vision inspection part (120), the marking part (130), and the mark inspection part (140).

The vision inspection part (120) is installed on the traveling path (MD) of the electrode sheet (10) to photograph the tab part (15) of the electrode sheet (10) during traveling after the notching process is completed. The vision inspection part (120) inspects defects (folded or lifted, etc.) in the tab part (15) of the electrode sheet (10), based on the preset defect information and photographic information.

Also, the marking part (130) indicates a defective mark (M) on the defective tab part (15) among the tab parts of the electrode sheet (10), based on the inspection information of the vision inspection part (120).

In addition, the tab guide part (200) passes the tab part (15) therein when the electrode sheet (10) is traveling, and the mark inspection part (140) is provided to inspect the defective mark (M) of the tab part (15) exposed through the first opening (225) of the tab guide part (220) when the electrode sheet (10) is traveling.

As described through Figure 8, the upper guide member (220) and the lower guide member (230) may have a vertically symmetric shape based on the electrode sheet (10) during traveling.

Alternatively, the upper guide member (220) and the lower guide member (230) may also have a vertically asymmetric structure based on the electrode base material (10).

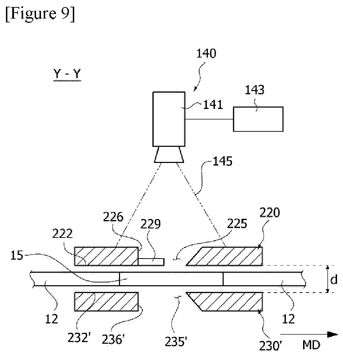

Figure 9 is a diagram in a state cut along the line Y-Y of Figure 6, which shows a tab guide part (300') according to a second example of the present invention.

Referring to Figure 9, in the tap guide part (200), the lower guide member (230') is disposed at the lower portion of the tab part (18) of the electrode sheet (10) during traveling, and is positioned to be apart at a predetermined interval from the upper guide member (220).

The lower guide member (230') may have a second opening (235') for exposing the tab part (15). However, the lower transparent member is not provided on the second opening (235').

Also, the lower guide member (230') may have a second guide surface (232') facing the lower surface of the tab part (15). The second guide surface (232') is disposed to face the lower surface of the tab part (15) during traveling.

In addition, the lower guide member (230') may be provided so that the second guide surface (232') comprises a non-transparent region through which light does not transmit. That is, the second guide surface (232') may be formed to have a non-transparent region.

Furthermore, in the lower guide member (230'), an inner peripheral surface (236') facing the second opening (235') may be provided to be orthogonal to the second guide surface (232').

### Industrial Applicability

According to the electrode sheet defect inspection device related to one example of the present invention, as a partial region of the tab guide part is formed of a transparent material, it is possible to prevent shadows from occurring upon inspecting defective marks.

## Claims

1. An electrode sheet (10) defect inspection device comprising:
a vision inspection part (110, 120) provided to inspect defects in each tab part (15, 18) during a traveling process of an electrode sheet (10) on which a plurality of tab parts (15) is formed;
a marking part (130) printing a defective mark on the tab part (15, 18) determined to be defective, based on inspection information of the vision inspection part (110, 120);
a tab guide part (200, 300') disposed to pass the tab part (15, 18) of the electrode sheet (10) passing through the marking part (130), having an opening (35, 45, 225) for exposing a partial region of the tab part (15, 18) during traveling to the outside, and provided so that a partial region surrounding the opening (35, 45, 225) is transparent; and
a mark inspection part (70, 140) provided to inspect the defective mark indicated on the tab part (15, 18) exposed to the outside through the opening (35, 45, 225) of the tab guide part (200, 300').

2. The electrode sheet (10) defect inspection device according to claim 1, wherein the tab guide part (200, 300') comprises:
an upper guide member (30, 220) disposed at the upper portion of the tab part (15, 18) of the electrode sheet (10) during traveling, and having a first main body (211, 221) having a first opening (225) for exposing the tab part (15, 18) and an upper transparent member (229) provided to cover a partial region of the first opening (225), and
a lower guide member disposed at the lower portion of the tab part (15, 18) of the electrode sheet (10) during traveling, and positioned to be apart at a predetermined interval from the upper guide member (30, 220).

3. The electrode sheet (10) defect inspection device according to claim 2, wherein
the tab guide part (200, 300') is disposed so that the tab part (15, 18) of the electrode sheet (10) during traveling passes through the interval between the upper guide member (30, 220) and the lower guide member.

4. The electrode sheet (10) defect inspection device according to claim 2, wherein
the upper guide member (30, 220) has a first guide surface (222) where the first main body (211, 221) faces the upper surface of the tab part (15, 18), and
the upper transparent member (229) is provided so that one surface is positioned on the same plane as the first guide surface (222).

5. The electrode sheet (10) defect inspection device according to claim 4, wherein
the upper guide member (30, 220) is provided such that the first guide surface (222) comprises a non-transparent region through which light does not transmit.

6. The electrode sheet (10) defect inspection device according to claim 4, wherein
the upper guide member (30, 220) is provided so that a mounting surface (226, 236), on which the upper transparent member (229) is mounted, is orthogonal to the first guide surface (222).

7. The electrode sheet (10) defect inspection device according to claim 5, wherein
in the upper guide member (30, 220), the first main body (211, 221) and the upper transparent member (229) are formed of different materials.

8. The electrode sheet (10) defect inspection device according to claim 2, wherein
the upper transparent member (229) is formed of a glass material.

9. The electrode sheet (10) defect inspection device according to claim 2, wherein
the mark inspection part (70, 140) is provided to inspect the defective mark indicated on the tab part (15, 18) exposed through the first opening (225) of the upper guide member (30, 220).

10. The electrode sheet (10) defect inspection device according to claim 2, wherein
the lower guide member has a second main body (231) having a second opening (235, 235') for exposing the tab part (15, 18), and a lower transparent member provided to cover a partial region of the second opening (235, 235').

11. The electrode sheet (10) defect inspection device according to claim 10, wherein
the lower guide member has a second guide surface (222, 232, 232') where the second main body (231) faces the lower surface of the tab part (15, 18), and
the lower transparent member is provided so that one surface is positioned on the same plane as the second guide surface (222, 232, 232').

12. The electrode sheet (10) defect inspection device according to claim 11, wherein
the lower guide member is provided so that the second guide surface (222, 232, 232') comprises a non-transparent region through which light does not transmit.

13. The electrode sheet (10) defect inspection device according to claim 11, wherein
the lower guide member is provided so that a mounting surface (226, 236), on which the lower transparent member is mounted, is orthogonal to the second guide surface (222, 232, 232').

14. The electrode sheet (10) defect inspection device according to claim 10, wherein
in the lower guide member, the second main body (231) and the lower transparent member are formed of different materials.

15. The electrode sheet (10) defect inspection device according to claim 10, wherein
the lower transparent member is formed of a glass material.

## Patentansprüche

1. Vorrichtung zur Fehlerprüfung von Elektrodenfolien (10), umfassend:
eine optische Prüfeinrichtung (110, 120) zum Prüfen, während eines Transportvorgangs einer Elektrodenfolie (10), auf der eine Vielzahl von Laschenelementen (15) ausgebildet ist, auf Fehler im jeweiligen Laschenelement (15, 18);
eine Markierungseinrichtung (130) zum Aufdrucken einer Fehlermarkierung auf den auf der Basis von Prüfungsinformationen der optischen Prüfeinrichtung (110, 120) als fehlerhaft ermittelten Laschenelementen (15, 18);
eine Laschen-Führungseinrichtung (200, 300'), die derart angeordnet ist, dass sie das Laschenelement (15, 18) der Elektrodenfolie (10), die den Markierungseinrichtung (130) durchläuft, weiterleitet, und die eine Öffnung (35, 45, 225) aufweist, um einen Teilbereich des Laschenelements (15, 18) während des Durchlaufs nach außen freizulegen, und so ausgebildet ist, dass ein die Öffnung (35, 45, 225) umgebender Teilbereich transparent ist; und
ein Markierungs-Prüfeinrichtung (70, 140), zum Prüfen auf eine Fehlermarkierung, die auf dem Laschenelement (15, 18) angezeigt wird, der durch die Öffnung (35, 45, 225) der Laschen-Führungseinrichtung (200, 300') nach außen freigelegt ist.

2. Vorrichtung zur Fehlerprüfung von Elektrodenfolien (10) nach Anspruch 1, wobei die Laschen-Führungseinrichtung (200, 300') umfasst:
ein oberes Führungselement (30, 220), das am oberen Abschnitt des Laschenelements (15, 18) der Elektrodenfolie (10) während des Transports angeordnet ist und einen ersten Hauptkörper (211, 221) mit einer ersten Öffnung (225) zum Freilegen des Laschenelements (15, 18) sowie ein oberes transparentes Element (229) aufweist, das vorgesehen ist, um einen Teilbereich der ersten Öffnung (225) abzudecken, und
ein unteres Führungselement, das während der Bewegung am unteren Abschnitt des Laschenelements (15, 18) der Elektrodenfolie (10) angeordnet ist und in einem vorbestimmten Abstand vom oberen Führungselement (30, 220) positioniert ist.

3. Vorrichtung zur Fehlerprüfung von Elektrodenfolien (10) nach Anspruch 2, wobei
der Laschen-Führungseinrichtung (200, 300') so angeordnet ist, dass der Laschenelement (15, 18) der Elektrodenfolie (10) während der Bewegung den Abstand zwischen dem oberen Führungselement (30, 220) und dem unteren Führungselement durchläuft.

4. Vorrichtung zur Fehlerprüfung von Elektrodenfolien (10) nach Anspruch 2, wobei
das obere Führungselement (30, 220) eine erste Führungsfläche (222) aufweist, wobei der erste Hauptkörper (211, 221) der Oberseite des Laschenelements (15, 18) zugewandt ist, und
das obere transparente Element (229) so vorgesehen ist, dass eine Oberfläche in derselben Ebene wie die erste Führungsfläche (222) liegt.

5. Vorrichtung zur Fehlerprüfung von Elektrodenfolien (10) nach Anspruch 4, wobei
das obere Führungselement (30, 220) so ausgebildet ist, dass die erste Führungsfläche (222) einen undurchsichtigen Bereich aufweist, durch den kein Licht hindurchtritt.

6. Vorrichtung zur Fehlerprüfung von Elektrodenfolien (10) nach Anspruch 4, wobei
das obere Führungselement (30, 220) so ausgebildet ist, dass eine Befestigungsfläche (226, 236), an der das obere transparente Element (229) befestigt ist, orthogonal zur ersten Führungsfläche (222) verläuft.

7. Vorrichtung zur Fehlerprüfung von Elektrodenfolien (10) nach Anspruch 5, wobei
im oberen Führungselement (30, 220) der erste Hauptkörper (211, 221) und das obere transparente Element (229) aus unterschiedlichen Materialien gebildet sind.

8. Vorrichtung zur Fehlerprüfung von Elektrodenfolien (10) nach Anspruch 2, wobei
das obere transparente Element (229) aus einem Glasmaterial gebildet ist.

9. Vorrichtung zur Fehlerprüfung von Elektrodenfolien (10) nach Anspruch 2, wobei
wobei das Markierungs-Prüfeinrichtung (70, 140) vorgesehen ist, um die Fehlermarkierung zu prüfen, die auf dem Laschenelement (15, 18) angezeigt werden, das durch die erste Öffnung (225) des oberen Führungselements (30, 220) freigelegt ist.

10. Vorrichtung zur Fehlerprüfung von Elektrodenfolien (10) nach Anspruch 2, wobei
das untere Führungselement einen zweiten Hauptkörper (231) mit einer zweiten Öffnung (235, 235') zum Freilegen des Laschenelements (15, 18) und ein unteres transparentes Element aufweist, das vorgesehen ist, um einen Teilbereich der zweiten Öffnung (235, 235') abzudecken.

11. Vorrichtung zur Fehlerprüfung von Elektrodenfolien (10) nach Anspruch 10, wobei
das untere Führungselement eine zweite Führungsfläche (222, 232, 232') aufweist, wobei der zweite Hauptkörper (231) der Unterseite des Laschenelements (15, 18) zugewandt ist, und
das untere transparente Element so vorgesehen ist, dass eine Oberfläche in derselben Ebene wie die zweite Führungsfläche (222, 232, 232') liegt.

12. Vorrichtung zur Fehlerprüfung von Elektrodenfolien (10) nach Anspruch 11, wobei
das untere Führungselement so vorgesehen ist, dass die zweite Führungsfläche (222, 232, 232') einen undurchsichtigen Bereich aufweist, durch den kein Licht hindurchtritt.

13. Vorrichtung zur Fehlerprüfung von Elektrodenfolien (10) nach Anspruch 11, wobei
das untere Führungselement so ausgebildet ist, dass eine Befestigungsfläche (226, 236), an der das untere transparente Element befestigt ist, orthogonal zur zweiten Führungsfläche (222, 232, 232') verläuft.

14. Vorrichtung zur Fehlerprüfung von Elektrodenfolien (10) nach Anspruch 10, wobei
im unteren Führungselement der zweite Hauptkörper (231) und das untere transparente Element aus unterschiedlichen Materialien gebildet sind.

15. Vorrichtung zur Fehlerprüfung von Elektrodenfolien (10) nach Anspruch 10, wobei
das untere transparente Element aus einem Glasmaterial gebildet ist.

## Revendications

1. Dispositif d'inspection de défaut de feuille d'électrode (10) comprenant :
un dispositif d'inspection visuelle (110, 120) agencé pour inspecter des défauts dans chaque partie de languette (15, 18) au cours d'un processus de déplacement d'une feuille d'électrode (10) sur laquelle ont été formées une pluralité de parties de languette (15) ;
une partie de marquage (130) imprimant une marque de défaut sur la partie de languette (15, 18) établie comme étant défectueuse, d'après des informations d'inspection du dispositif d'inspection visuelle (110, 120) ;
une partie de guide de languette (200, 300') disposée pour faire passer la partie de languette (15, 18) de la feuille d'électrode (10) passant à travers la partie de marquage (130), dotée d'une ouverture (35, 45, 225) pour exposer une zone partielle de la partie de languette (15, 18) au cours d'un déplacement vers l'extérieur, et agencée de sorte qu'une zone partielle entourant l'ouverture (35, 45, 225) soit transparente ; et
une partie d'inspection de marque (70, 140) agencée pour inspecter une marque de défaut indiquée sur la partie de languette (15, 18) exposée à l'extérieur à travers l'ouverture (35, 45, 225) de la partie de guide de languette (200, 300').

2. Dispositif d'inspection de défaut de feuille d'électrode (10) selon la revendication 1, la partie de guide de languette (200, 300') comprenant :
un élément de guidage supérieur (30, 220) disposé sur la partie supérieure de la partie de languette (15, 18) de la feuille d'électrode (10) au cours du déplacement, et possédant un premier corps principal (211, 221) doté d'une première ouverture (225) pour exposer la partie de languette (15, 18) et un élément transparent supérieur (229) agencé pour couvrir une zone partielle de la première ouverture (225), et
un élément de guidage inférieur disposé sur la partie inférieure de la partie de languette (15, 18) de la feuille d'électrode (10) au cours du déplacement, et positionné pour être séparé de l'élément de guidage supérieur (30, 220) par un intervalle prédéterminé.

3. Dispositif d'inspection de défaut de feuille d'électrode (10) selon la revendication 2,
la partie de guide de languette (200, 300') étant disposée de sorte que la partie de languette (15, 18) de la feuille d'électrode (10) au cours du déplacement passe à travers l'intervalle entre l'élément de guidage supérieur (30, 220) et l'élément de guidage inférieur.

4. Dispositif d'inspection de défaut de feuille d'électrode (10) selon la revendication 2,
l'élément de guidage supérieur (30, 220) possédant une première surface de guidage (222) où le premier corps principal (211, 221) est placé face à la surface supérieure de la partie de languette (15, 18), et
l'élément transparent supérieur (229) étant agencé de sorte qu'une surface soit positionnée sur le même plan que la première surface de guidage (222).

5. Dispositif d'inspection de défaut de feuille d'électrode (10) selon la revendication 4,
l'élément de guidage supérieur (30, 220) étant agencé de sorte que la première surface de guidage (222) comprenne une zone non transparente par laquelle la lumière n'est pas transmise.

6. Dispositif d'inspection de défaut de feuille d'électrode (10) selon la revendication 4,
l'élément de guidage supérieur (30, 220) étant agencé de sorte qu'une surface de montage (226, 236), sur laquelle est monté l'élément transparent supérieur (229), soit perpendiculaire à la première surface de guidage (222).

7. Dispositif d'inspection de défaut de feuille d'électrode (10) selon la revendication 5,
l'élément de guidage supérieur (30, 220), le premier corps principal (211, 221), et l'élément transparent supérieur (229) étant réalisés avec différents matériaux.

8. Dispositif d'inspection de défaut de feuille d'électrode (10) selon la revendication 2,
l'élément transparent supérieur (229) étant réalisé avec un matériau vitreux.

9. Dispositif d'inspection de défaut de feuille d'électrode (10) selon la revendication 2,
la partie d'inspection de marque (70, 140) étant agencée pour inspecter la marque de défaut indiquée sur la partie de languette (15, 18) exposée à travers la première ouverture (225) de l'élément de guidage supérieur (30, 220).

10. Dispositif d'inspection de défaut de feuille d'électrode (10) selon la revendication 2,
l'élément de guidage inférieur possédant un deuxième corps principal (231) doté d'une deuxième ouverture (235, 235') pour exposer la partie de languette (15, 18), et un élément transparent inférieur agencé pour couvrir une zone partielle de la deuxième ouverture (235, 235').

11. Dispositif d'inspection de défaut de feuille d'électrode (10) selon la revendication 10,
l'élément de guidage inférieur possédant une deuxième surface de guidage (222, 232, 232') où le deuxième corps principal (231) est situé face à la surface inférieure de la partie de languette (15, 18), et
l'élément transparent inférieur étant agencé de sorte qu'une surface soit positionnée sur le même plan que la deuxième surface de guidage (222, 232, 232').

12. Dispositif d'inspection de défaut de feuille d'électrode (10) selon la revendication 11,
l'élément de guidage inférieur étant agencé de sorte que la deuxième surface de guidage (222, 232, 232') comprenne une zone non transparente par laquelle la lumière n'est pas transmise.

13. Dispositif d'inspection de défaut de feuille d'électrode (10) selon la revendication 11,
l'élément de guidage inférieur étant agencé de sorte qu'une surface de montage (226, 236), sur laquelle est monté l'élément transparent inférieur, soit perpendiculaire à la deuxième surface de guidage (222, 232, 232').

14. Dispositif d'inspection de défaut de feuille d'électrode (10) selon la revendication 10,
dans lequel, dans l'élément de guidage inférieur, le deuxième corps principal (231) et l'élément transparent inférieur sont réalisés avec différents matériaux.

15. Dispositif d'inspection de défaut de feuille d'électrode (10) selon la revendication 10,
l'élément transparent inférieur étant réalisé avec un matériau vitreux.
